# EUROPÄISCHE PATENTSCHRIFT

(11) **EP 2 855 574 B1**
(45) Veröffentlichungstag und Bekanntmachung des Hinweises auf die Patenterteilung: **13.07.2016**
(21) Anmeldenummer: 13727581.4
(22) Anmeldetag: 31.05.2013
(51) Int. Cl.: C08K 5/43, C09J 175/04

(54) **KLEBSTOFFE MIT HAFTVERMITTLERN MIT SULFONAMIDGRUPPEN**
ADHESIVES HAVING ADHESION PROMOTERS WITH SULPHONAMIDE GROUPS
ADHÉSIFS COMPRENANT DES AGENTS ADHÉSIFS CONTENANT DES GROUPES SULFONAMIDE

(30) Priorität: 01.06.2012 DE 102012209268
(43) Veröffentlichungstag der Anmeldung: 08.04.2015
(73) Patentinhaber: Henkel AG & Co. KGaA, 40589 Düsseldorf (DE)
(72) Erfinder: BANKMANN, Dennis, 40595 Düsseldorf (DE); JUNGHOLT, Nina, 47661 Issum (DE); TOMKE, Stefan, 46147 Oberhausen (DE)
(86) Internationale Anmeldenummer: PCT/EP2013/061288
(87) Internationale Veröffentlichungsnummer: WO 2013/178796

(56) Entgegenhaltungen:
- US-A- 5 272 224
- US-A- 5 476 889
- US-A- 5 478 652

## Beschreibung

Die Erfindung betrifft Klebstoffe zum Verkleben von Kunststoff oder Metallsubstraten, die einen Haftvermittler enthalten, der Sulfonamidgruppen enthält. Die Erfindung betrifft weiterhin ein Verfahren zum Verkleben von folienförmigen Substraten mit einem Klebstoff, der einen Haftvermittler mit Sulfonamidgruppen enthält.

Es ist bekannt, dass Klebstoffe zu verschiedenen Substraten unterschiedliche Haftungseigenschaften aufweisen. Um dieser Problematik auszuweichen, kann man je nach Substrat einen speziell angepassten Klebstoff einsetzen. Das ist aber sehr aufwändig. Es ist weiterhin bekannt, dass man über eine Vorbehandlung der Substratoberfläche die Haftung verbessern kann. Die bekannten Anlagen dazu, z.B. Plasma oder Coronabehandlung oder Abflämmen, sind aber ebenso aufwändig. Es ist andererseits auch bekannt, Klebstoffen Haftvermittler zuzusetzen. Beispiele dafür sind reaktive Haftvermittler auf Basis von Alkoxysilanen. Während Foliensubstrate häufig in industriellen Anlagen verarbeitet werden, sind Verklebungen mit festen Substraten auch als einzelner Verklebungsschritt durchzuführen. Dabei sind dort Vorbehandlungen schwieriger durchzuführen. Es werden auch dort die bekannten Haftvermittler eingesetzt.

Die WO2011/042267 beschreibt ein Verfahren zum Verkleben von Folien. Dabei wird ein 2K-PU-Klebstoff mit speziellen Haftvermittlern bereitgestellt, der eine gute Haftung zu den verschiedenen Substraten ermöglicht. Diese Haftvermittler müssen als Strukturmerkmal Carboxylgruppen, α-Hydroxyketo-Gruppen oder β-Diketo-Gruppen aufweisen. Es werden verschiedene Carbonsäure, Ester, Ketone oder Dihydroxyverbindungen beschrieben.

Die US3046262 beschreibt anaerob vernetzende Zusammensetzungen, die Acrylatgruppen aufweisende Polyether enthalten. Weiterhin sind als Bestandteil der Katalysatorzusammensetzung Sulfimide beschrieben. Es werden ausschließlich anaerob vernetzende Systeme auf Basis von Acrylaten beschrieben.

Die EP 1 013 735 B1 beschreibt anaerob härtbare Dichtungszusammensetzungen mit Urethanacrylatprepolymeren. Saccharin wird als Härtungsbeschleuniger eingesetzt. Die Zusammensetzung soll metallische Oberflächen dicht verbinden. Inerte Materialien wie Kunstoffoberflächen können nur unter Verwendung einer Grundierung, die ein Reduktionsmittel enthält, mit metallischen Oberflächen innerhalb kurzer Zeit verbunden werden. Eine Aushärtung ist, wie bei anaeroben Klebstoff- bzw. Dichtungszusammensetzungen allgemein gegeben, in Gegenwart von Luft bzw. Sauerstoff beeinträchtigt. Die Aushärtung des Dichtungsmittels in Gegenwart von Sauersoff, also unter aeroben Bedingungen, ist nur durch zusätzliche Grundierung der Oberflächen mit einem Reduktionsmittel erfolgreich.

Die US 2009/0277356 A1 offenbart anaerob härtende (meth)acrylatbasierte Klebstoffzusammensetzungen. Als Härtungsbeschleuniger wird, neben anderen Verbindungen, auch Saccharin genannt. Die in der Klebstoffzusammensetzung enthaltenden (meth)acrylatbasierten können auch Urethangruppen als funktionelle Gruppen aufweisen, wie sie beispielsweise durch Umsetzung von Isocyanatverbindungen mit Hydroxylverbindungen bei der Herstellung einer der möglichen Klebstoffzusammensetzungen resultieren. Eine unvollständige Umsetzung kann dabei zu Restmengen von NCO-funktionalisierten Verbindungen führen. Es handelt sich allerdings nicht um NCO-reaktive Klebstoffe, die sich dadurch auszeichnen, dass ihre Aushärtung auf einer Vernetzungsreaktion der NCO-Gruppen beruht.

Die US 6958368 B1 offenbart Härtungsbeschleuniger für anaerob härtende Zusammensetzungen aus der Gruppe der Sulfinimide, Sulfonimide und Sulfonamide sowie entsprechender Sauerstoff- und Schwefel-Derivate. Die anaeroben Klebstoffzusammensetzungen basieren auf (Meth)acrylaten, die als zusätzliche funktionelle Gruppen unter anderem auch Urethangruppen enthalten können. Es handelt sich dabei nicht um Klebstoffzusammensetzungen, die unter aeroben Bedingungen aushärten.

Die DE 199 40 261 A1 offenbart wasserlösliche Schmelzklebstoffe zum Verkleben von Papier, die beispielsweise durch Versprühen aufgetragen werden. Neben Polyacrylaten, Polyestern, Polyalkylenglykolen werden Polyurethane als Schmelzklebstoff aufgeführt. Um eine visuelle Beurteilung des Sprühbildes zu ermöglichen, wird ein UV-aktiver Fluoreszenz-Farbstoff dem Schmelzklebstoff zugemischt. Unter diesen Farbstoffen finden sich unter anderem Sulfamidophenylverbindungen oder auch Amidosulfonylphenylverbindungen. Diese Verbindungen tragen Ph-SO₂-NH₂-Gruppen und weisen nicht die für die Haftvermittlung besonders geeigneten Sulfonimid- bzw. Amidosulfonsäure-/Amidosulfonat-Gruppen auf.

Die US 2001/0031367 A1 offenbart elektrisch lösbare Klebstoffzusammensetzungen auf der Basis von Epoxid-, Phenol-, Melamin-, Maleimid-, Acrylharzen oder auch Polyurethanen. Zusätzlich enthalten die Zusammensetzungen Elektrolyte. Die in der Klebstoffzusammensetzung gelösten Elektrolyte führen zur ionischen Leitfähigkeit des Klebstoffs und stellen sicher, dass bei Anlegen einer elektrischen Spannung Redoxreaktionen an der Oberfläche des verklebten elektrisch leitfähigen Substrats ablaufen können, die schließlich zum Verlust der Klebkraft führen. Unter anderem wird Lithiumtrifluormethansulfonimid als geeigneter Elektrolyt genannt. Diese Verbindung weist nicht die für die Haftvermittlung geeigneten Sulfonimid- bzw. Amidosulfonsäure-/Amidosulfonat-Gruppen auf und ist zudem giftig bei Berührung mit der Haut und beim Verschlucken.

Es ist bekannt, dass zum Verkleben von festen Substraten häufig Haftvermittler eingesetzt werden. Dadurch können teilweise aufwändige Vorbehandlungen vermieden werden. Das ist besonders auch für Metalloberflächen wichtig.

Das Dokument US 5 272 224 offenbart zum Beispiel silanterminierte PUR-Klebstoffe, die hydrolysierbare Silanverbindungen als Haftvermittler enthalten.

Als flexible Substrate sind Mehrschichtfolien in der Verpackungsindustrie allgemein bekannt.

Diese können aus zwei und mehr Schichten aufgebaut sein, wobei die einzelnen Schichten jeweils als Folie miteinander verklebt werden. Diese Folien können aus Polymeren, beispielsweise thermoplastischen Polymeren, bestehen, es können auch Papierschichten enthalten sein sowie Metallfolien. Weiterhin können auch metallisierte Folien eingesetzt werden. Auch bedruckte Folien werden häufig verklebt. Klebstoffe für diese Art der Verklebung sind in verschiedenen Formen bekannt, wie wasserbasierte Klebstoffe, Schmelzklebstoffe oder reaktive Klebstoffsysteme.

Es ist bekannt, dass solche Klebstoffe häufig zum Verkleben von Folien für die Lebensmittel- oder die Pharmaindustrie eingesetzt werden. Bei solchen Anwendungsgebieten ist es besonders wichtig, dass die eingesetzten Ausgangsmaterialien möglichst nicht in das Füllgut migrieren können oder auch gesundheitlich unbedenklich sind. Eine Migration kann beispielsweise durch ein hohes Molekulargewicht vermindert werden. Es sollen alle Bestandteile des Klebstoffs nach dem Aushärten nicht an die Oberfläche migrieren können, um eine gleichmäßige und dauerhafte Verklebung zu erzielen.

Es besteht für einen Verbund aus Metalloberflächen und Kunststofffolien zusätzlich das Problem, dass die Haftung zu der Metalloberfläche nicht ausreichend ist. An metallischen Substraten können sich weiterhin farbige Komplexe mit Klebstoffbestandteilen bilden, die eine optische Beeinträchtigung beim Verkleben mit transparenten Folien ergeben. Es ist aber auch bekannt, dass bedruckte Oberflächen Probleme beim Verkleben geben können.

Anaerobe Klebstoffe oder Dichtungsmittel enthalten typischerweise (Meth)acrylatverbindungen, Peroxide, Inhibitoren und Härtungsbeschleuniger. Durch eine Spaltung der Peroxide werden Radikale freigesetzt, die die Polymerisation der (Meth)acrylatverbindungen initiieren und somit zur Aushärtung führen. Dieser Prozess wird durch zahlreiche Redoxprozesse beeinflusst, die wiederum durch geeignete Härtungsbeschleuniger, darunter beispielsweise Sulfimide, Sulfamide oder Sulfonimide gesteuert werden können. Die Peroxide werden dabei durch Redoxreaktionen mit Metallionen sowohl reduktiv als auch oxidativ gespalten. In diesem Katalysezyklus werden unterschiedliche Oxidationsstufen der Metallionen durchlaufen. Härtungsbeschleuniger wie Saccharin dienen dazu, die katalytisch wirksamen Metallionen aus der zu verklebenden Oberfläche zu lösen, für die Aushärtung des Klebstoffs zur Verfügung zu stellen und damit die Reaktion zu beschleunigen. Die Aushärtung wird durch Reduktions- oder Oxidationsmittel beeinflusst und ist in Gegenwart von Luftsauerstoff erschwert. Umgekehrt sichert die Gegenwart von Luftsauerstoff im Zusammenspiel mit den Inhibitoren eine hohe Lagerstabilität der Zusammensetzung. Nur in Abwesenheit von Sauerstoff und in Gegenwart von Metallionen, die beispielsweise aus dem zu verklebenden metallischen Substrat stammen, findet eine Aushärtung statt. Eine Verklebung von Kunststoffoberflächen mit anaeroben Klebstoffen ist in der Regel nicht ohne eine weitere Vorbehandlung möglich.

Aufgabe der vorliegenden Erfindung ist es deswegen, einen Klebstoff zur Verfügung zu stellen, der einen Haftvermittler umfasst, der farblose Produkte ergibt und auch gesundheitlich weniger bedenklich ist. Dabei soll der Haftvermittler lagerstabil in den Klebstoff eingearbeitet werden können, außerdem soll eine Migration aus dem Klebstoff gering sein. Dieser Klebstoff soll eine gute Haftung auf den verschiedenen Substraten sicherstellen, und dabei insbesondere auch eine Verklebung nichtmetallischer Oberflächen ermöglichen. Weiterhin soll der Klebstoff sowohl unter aeroben als auch unter anaeroben Bedingungen aushärten können.

Die Aufgabe wird gelöst durch einen Klebstoff zum Verkleben von Kunststoff- und/oder Metallsubstraten ausgewählt aus flüssigen oder thermoplastischen Klebstoffen, die in der Polymerkette Urethangruppen aufweisen, dadurch gekennzeichnet, dass der Klebstoff ausgewählt wird aus NCO-reaktiven Klebstoffen, Silan-reaktiven Klebstoffen oder thermoplastischen Polyurethanen (TPU) und als Bestandteil 0,01 bis 10 Gew-% mindestens einer Verbindung (H) mit einem Molekulargewicht unter 500 g/mol enthält, die mindestens eine Sulfonimid-Gruppe mit einer SO₂-NH-C(O)-Struktur oder mindestens eine Amidosulfonat-Gruppe aufweist.
Werden die Substanzen in deprotonierter oder protonierter Form als ionischer Bestandteil eines Salzes eingesetzt, so bezieht sich das Molekulargewicht auf die entsprechende neutrale Form, die durch Protonierung beziehungsweise Deprotonierung dieses Ionischen Bestandteils erhalten werden kann. Insbesondere kann die Amidosulfonat-Gruppe protoniert als Amidosulfonsäure-Gruppe oder deprotoniert als anionische Gruppe vorliegen.

Die Erfindung betrifft weiterhin ein Verfahren zum Verkleben von Substraten, wobei ein entsprechender Klebstoff enthaltend eine Verbindung (H) eingesetzt wird. Die Erfindung betrifft weiter eine Mehrschichtfolie, die mit einem entsprechenden Klebstoff verklebt ist.

Verfahren zum Verkleben von festen oder folienförmigen Substraten sind allgemein bekannt. Dabei können unterschiedliche Klebstoffe eingesetzt werden. Gemäß der vorliegenden Erfindung werden Klebstoffe auf Basis von Polyurethanen eingesetzt, die gut zu verarbeiten sind und eine gute Haftung auf den verklebten Substraten ergeben. Durch die enthaltenen Urethangruppen ist eine gute Verträglichkeit mit den erfindungsgemäß eingesetzten haftvermittelnden Verbindungen gegeben.

Als Substrate im erfindungsgemäßen Verfahren können die bekannten Substrate aus Kunststoff und/oder Metall eingesetzt werden. Es kann sich dabei um starre, feste oder flexible Substrate handeln. Die Oberflächen können auch vorbehandelt sein, beispielsweise beschichtet oder bedruckt. Es können gleiche oder unterschiedliche Substrate verklebt werden. Es ist ebenfalls möglich, dass eine Oberfläche eines Substrats aus anderen Materialien besteht, beispielsweise Keramik oder Stein. In einer Ausführungsform können zwei feste oder ein festes und ein flexibles Substrat miteinander verklebt werden. Insbesondere weist ein Substrat eine Metalloberfläche auf.

In einer besonderen Ausführungsform werden an sich bekannte flexible folienförmige Substrate, wie Kunststofffolien, Metallfolien, Papierfolien oder Karton miteinander verklebt. Diese werden in zwei oder mehreren Schichten zu Mehrschichtfolien verklebt.

Als Folienmaterialien zum Herstellen solcher Mehrschichtfolien nach dem erfindungsgemäßen Verfahren können die bekannten flexiblen Folien eingesetzt werden. Es handelt sich dabei um Substrate aus thermoplastischen Kunststoffen in Folienform, beispielsweise Polyolefine, wie Polyethylen (PE) oder Polypropylen (PP, CPP, OPP), Polyvinylchlorid (PVC), Polystyrol (PS), Polyestern, wie PET, Polyamid, natürliche Polymere, wie Cellophan oder Papier. Dabei können die Folienmaterialen auch an der Oberfläche modifiziert sein, z.B. durch Modifizieren der Polymere mit funktionellen Gruppen, es können zusätzliche Komponenten, beispielsweise Pigmente, Farbstoffe, enthalten sein oder es sind geschäumte Schichten in der Folie enthalten. Es kann sich um gefärbte, bedruckte, farblose oder transparente Folien handeln. Weiterhin können die Folien einer Oberflächenbehandlung, beispielsweise Corona-, Plasma-Behandlung oder Abflämmen, unterzogen werden.

In einer besonderen Ausführungsform ist der erfindungsgemäße Klebstoff zur Verklebung von Folienmaterialien geeignet, wobei ein Substrat eine Metalloberfläche aufweist, insbesondere eine Aluminiumoberfläche. Es kann sich dabei um Metallfolien, insbesondere eine Aluminiumfolie, handeln oder um Kunststofffolien, die eine Aluminium-beschichtete Oberfläche aufweisen. Aus den entsprechenden flexiblen Folienmaterialien zusammen mit den erfindungsgemäßen Klebstoffen können Mehrschichtfolien hergestellt werden.

Ein erfindungsgemäß geeigneter Klebstoff kann ausgewählt werden aus an sich bekannten 2-Komponenten-PU-Klebstoffen, 1 K-PU-Klebstoffen, thermoplastischen PU-Klebstoffen oder Silan-vernetzenden Klebstoffen. Diese erfindungsgemäßen Klebstoffe enthalten in der Polymerkette Urethangruppen, beispielsweise in Prepolymeren und/oder nach der Vernetzung im Polymernetzwerk. Diese Klebstoffe sollen als zusätzlichen Bestandteil eine Verbindung (H) enthalten, die Sulfonimid- oder Amidosulfonat-Gruppen aufweisen.

Eine Gruppe von geeigneten Klebstoffen sind thermoplastische Klebstoffe, insbesondere thermoplastische Polyurethanklebstoffe. Es handelt sich dabei um nicht reaktive Schmelzklebstoffe, die als Bindemittel ein PU-Polymer hergestellt durch Reaktion von einem oder mehreren Polyolen und Polyisocyanaten enthalten. Diese thermoplastischen Polyurethane (TPU) weisen eine Anzahl von Urethangruppen auf, diese sind auch zur Ausbildung von Wasserstoff-Brücken befähigt. Die TPU sind meist linear aufgebaut, sie sollen keine reaktiven NCO-Gruppen enthalten. Über Auswahl der Polyole und der Isocyanate kann Molekulargewicht, Viskosität und Schmelzverhalten der TPU beeinflusst werden. Die TPU sind bei Raumtemperatur fest, sie können üblicherweise bei Temperaturen über 100°C aufgeschmolzen und appliziert werden. Die Verklebung erfolgt durch das Erstarren bei der Abkühlung. Der thermoplastische Klebstoff enthält diese thermoplastischen Polyurethane in einer Menge von mehr als 20 Gew.-%, bevorzugt mehr als 50 Gew.-%, noch weiter bevorzugt mehr als 80 Gew.-%, insbesondere aber von 90 bis 99,99 Gew.-%.

Eine andere Gruppe von geeigneten Klebstoffen sind reaktive Klebstoffe, die über Silangruppen vernetzen können. Sie werden auch als Silan-reaktive Klebstoffe bezeichnet. Diese enthalten als vernetzenden Bestandteil Polymere, die Urethangruppen enthalten. Das Grundgerüst der Polymere kann insbesondere aus Polyethern aufgebaut sein oder aus Poly(meth)acrylaten, die an der Polymerkette hydrolysierbare Silangruppen enthalten. Bei geeigneten Silangruppen handelt es sich um Silangruppen mit hydrolisierbaren Resten, zum Beispiel Di- oder Trialkoxysilangruppen mit C1- bis C4-Alkoxygruppen. Über diese hydrolisierbaren funktionellen Gruppen können die Klebstoffe nach der Applikation vernetzen. Der Silan-reaktive Klebstoff enthält diese Polymere in einer Menge von mehr als 20 Gew.-%, bevorzugt mehr als 50 Gew.-%, noch weiter bevorzugt mehr als 80 Gew.-%, insbesondere aber von 90 bis 99,99 Gew.-%.

Beispiele für geeignete Polymere sind Polyoxyalkylen-Prepolymere mit mindestens zwei hydrolisierbaren Silangruppen. Beispielsweise können diese silanhaltigen Prepolymere aus Polyetherdiolen durch Umsetzung erhalten werden. Die OH-Gruppen können mit Isocyanatosilanen umgesetzt werden, sodass Silan-Gruppen im Polymeren anreagiert werden. Die Polyetherpolyole können auch mit Isocyanaten umgesetzt werden, sodass NCO-terminierte Prepolymere entstehen. Die freien NCO-Gruppen können dann mit Silanverbindungen umgesetzt werde.

Andere geeignete Prepolymere sind solche auf Basis von Poly(meth)acrylaten, die ebenfalls mindestens zwei hydrolysierbare Silangruppe an der Polymerkette aufweisen. Es handelt sich um Polymerisationsprodukte aus Alkyl(meth)acrylatestern, die noch OH-Gruppen enthalten. Diese können, wie bereits beschrieben, mit Isocyanatosilanen umgesetzt werden oder sie werden erst mit Isocyanaten und anschließend mit Silangruppen-haltigen Verbindungen umgesetzt. Solche Polymere sind dem Fachmann bekannt und kommerziell erhältlich.

Eine bevorzugte Gruppe geeigneter Klebstoffen sind 1 K-PU-Klebstoffe. Diese enthalten als Hauptbestandteil PU-Prepolymere, die noch freie NCO-Gruppen aufweisen. Die 1 K-PU-Klebstoffe enthalten die PU-Prepolymere in einer Menge von mehr als 20 Gew.-%, bevorzugt mehr als 50 Gew.-%, noch weiter bevorzugt mehr als 80 Gew.-%, insbesondere aber von 90 bis 99,99 Gew.-%. Die Prepolymere sind Umsetzungsprodukte von OH-Gruppen oder NH-Gruppen-tragenden Verbindungen mit einem Überschuss von Polyisocyanaten. Die bei der Herstellung der PU-Prepolymere einsetzbaren Polyole und Polyisocyanate sind dem Fachmann bekannt. Es handelt sich dabei um die für Klebstoffanwendung bekannten Polyole oder entsprechende Verbindungen mit sekundären und/oder primären Aminogruppen sowie bevorzugt Diisocyanate. Es kann sich dabei beispielsweise um Polyole auf Basis von Polyethern, Polyestern, Polyolefinen, Polyacrylaten oder Alkylenpolyolen handeln. Es sind OH-Gruppen-haltige Ausgangsverbindungen bevorzugt. Insbesondere geeignet zur Synthese dieser Prepolymere sind Polyole mit einem Molekulargewicht bis zu 20000 g/mol, insbesondere von 100 bis zu 10000 g/mol (zahlenmittleres Molekulargewicht, M_{N}, wie durch GPC bestimmbar). Durch die Menge der Polyisocyanate relativ zu den Polyolen können Anzahl der NCO-Gruppen, Molekulargewicht und Viskosität des PU-Prepolymers beeinflusst werden.

Ein andere bevorzugte Gruppe geeigneter Klebstoff sind 2-Komponenten PU-Klebstoffe. Diese enthalten eine Komponente A mit mindestens einer NCO-Gruppen-haltigen Verbindung, beispielsweise aus der Gruppe der Polyisocyanate oder NCO-haltigen Prepolymere, und eine zweite Komponente B mit mindestens einer als Vernetzer wirkenden Verbindung, die mindestens zwei mit NCO-Gruppen reagierende funktionelle Gruppen aufweist, beispielsweise OH-Gruppen, COOH-Gruppen, SH- oder NH-Gruppen. Es können im Klebstoff zusätzlich weitere Hilfsstoffe und Additive enthalten sein. Die Gesamtheit aller NCO-Gruppen-haltigen Verbindungen ist in einer Menge von mehr als 20 Gew.-%, bevorzugt mehr als 50 Gew.-%, insbesondere mehr als 80 Gew.-% in der Komponente A enthalten. Die Gesamtheit der als Vernetzer wirkenden Verbindungen ist in der Komponente B in einer Menge von mehr als 20 Gew.-%, bevorzugt mehr als 50 Gew.-%, insbesondere mehr als 80 Gew.-% enthalten.

Diese 1 K- und 2K-PU-Klebstoffe, die sich dadurch auszeichnen, dass die Vernetzung und somit die Aushärtung des Klebstoffs durch eine Reaktion der NCO-Gruppen erfolgt, werden auch als NCO-reaktive Klebstoffe bezeichnet.

Als Polyisocyanate für die Komponente A der 2K-PU-Klebstoffe können die an sich bekannten Polyisocyanate mit zwei oder mehr Isocyanat-Gruppen eingesetzt werden. Geeignete Polyisocyanate sind aromatische Isocyanate, wie beispielsweise 1,5-Naphthylendiisocyanat (NDI), 2,4'- oder 4,4'-Diphenylmethandiisocyanat (MDI), die Isomeren des Toluylendiisocyanats (TDI), Methylentriphenyltriisocyanat (MIT), oder aliphatische Isocyanate, wie hydriertes MDI (H12MDI), Tetramethylxylylendiisocyanat (TMXDI), 1-Isocyanatomethyl-3-isocyanato-1,5,5-trimethylcyclohexan (IPDI), Xylylendiisocyanat (XDI), Hexan-1,6-diisocyanat (HDI), Dicyclohexylmethandiisocyanat. Es können auch mindestens trifunktionelle Isocyanate eingesetzt werden, die durch Trimerisation oder Oligomerisation von Diisocyanaten entstehen können.

Geeignete NCO-haltige Prepolymere als Komponente A sind Umsetzungsprodukte von OH-Gruppen und/oder NH-Gruppen-tragenden Verbindungen mit einem Überschuss von Polyisocyanaten. Die bei der Synthese der PU-Prepolymere einsetzbare Polymere und Polyisocyanate sind dem Fachmann bekannt. Es können auch die oben beschriebenen 1 K-PU-Prepolymere eingesetzt werden, soweit diese eine geeignete Viskosität aufweisen.

Die Polyolkomponente kann dabei niedermolekular sein, beispielsweise von ca. 60 g/mol bis 1.500 g/mol, es können jedoch auch höhermolekulare Polymere umgesetzt werden, beispielsweise solche mit einem Molekulargewicht von 1.500 bis 50.000 g/mol, insbesondere von 1.500 bis 25.000 g/mol (zahlenmittleres Molekulargewicht, M_{N}, wie durch GPC bestimmbar). Dabei sollen im Durchschnitt zwei reaktive Gruppen am Polyol vorhanden sein, beispielsweise Diole. Es ist auch möglich, Verbindungen mit mehreren OH-Gruppen umzusetzen.

Durch die Menge der Isocyanate kann die Reaktionsführung beeinflusst werden. Wird ein hoher Überschuss an Isocyanaten eingesetzt, entstehen PU-Prepolymermischungen, die auch noch nicht abreagierte Diisocyanate enthalten können. Dabei wird nur ein geringer Molekulargewichtsaufbau festgestellt. Werden geringere Mengen an Isocyanaten eingesetzt oder wird die Reaktion stufenweise durchgeführt, so ist es bekannt, dass das Molekulargewicht der Prepolymere im Vergleich zu den Ausgangsverbindungen erhöht wird. Insgesamt muss in diesem Falle sichergestellt sein, dass ein Überschuss an Isocyanat bezogen auf die Gesamtreaktion eingesetzt wird. Die Umsetzung der Polyolverbindung mit den Isocyanaten kann auf bekannte Art und Weise erfolgen.

Insbesondere bevorzugt sind als Komponente A PU-Prepolymere, die auf Basis von Polyesterpolyolen oder Polyetherpolyolen durch Umsetzung mit Diisocyanaten hergestellt worden sind. In der Regel weisen die im Rahmen der vorliegenden Erfindung eingesetzten PU-Prepolymere ein Molekulargewicht von 500 bis etwa 30.000 g/mol auf, bevorzugt bis 15.000 g/mol, insbesondere von 1.000 bis 5.000 g/mol (zahlenmittleres Molekulargewicht, M_{N}, wie durch GPC bestimmbar). Eine andere bevorzugte Ausführungsform setzt als Komponente A aliphatische Isocyanate und ihre Oligomere ein.

Die Komponente B eines bevorzugten 2K-PU-Klebstoffs muss mindestens eine Verbindung enthalten, die mindestens zwei gegenüber Isocyanatgruppen reaktive Gruppen aufweist. Beispielsweise kann es sich dabei um COOH-, SH-, NH- oder OH-Gruppen handeln, insbesondere sind Polyole bevorzugt, wobei es sich auch um Mischungen von Polyolen unterschiedlicher chemischer Struktur oder unterschiedlichen Molekulargewichts handeln kann. Diese Verbindungen wirken als Vernetzer.

Die geeigneten Verbindungen, die mindestens zwei reaktive Gruppen aufweisen, können einzeln oder im Gemisch eingesetzt werden. Über die Auswahl der Bestandteile der Komponente B kann die Viskosität beeinflusst werden. Werden polymere Polyole eingesetzt, zeigt B eine höhere Viskosität. Bei Verwendung von Anteilen von niedermolekularen Polyolen ist die Viskosität niedriger.

Geeignete Polymere für 1 K-PU, 2K-PU-Klebstoffe, Silan-vernetzende Klebstoffe oder als TPU, die als Klebstoff Urethangruppen enthalten, sind dem Fachmann im Prinzip bekannt. Sie sind auch kommerziell erhältlich. Diese Polymere können gegebenenfalls noch Zusatzstoffe enthalten und dann den Klebstoff bilden.

In einem erfindungsgemäßen Klebstoff muss mindestens eine niedermolekulare Verbindung (H) enthalten sein. Sie soll als Haftvermittler wirken. Die Verbindung (H) weist mindestens eine Sulfonimid- oder Amidosulfonat-Gruppe auf. Es können auch beide Gruppen in der Verbindung enthalten sein. Bei den Verbindungen (H) mit einer Sulfonimidgruppe handelt es sich um Verbindungen, die eine SO₂-NH-C(O)-Struktur enthalten. Die Verbindung soll ein Molekulargewicht unter 500 g/mol aufweisen, insbesondere unter 400 g/mol. Es handelt sich dabei um niedermolekulare Verbindungen ohne Massenstreuung. Das Molekulargewicht wird auf der Grundlage der Molekülstruktur berechnet und kann experimentell mit Hilfe der Massenspektroskopie bestimmt werden. Die Verbindung (H) kann auch weitere funktionelle Gruppen aufweisen, soweit diese nicht zur Aushärtung des Klebstoffsystems führen und der Klebstoff lagerstabil bleibt. Diese sollen mindestens ein NH-acides Wasserstoffatom aufweisen. Es kann sich um lineare Verbindungen handeln, bevorzugt liegen die Sulfonimid- oder Amidosulfonat-Gruppen jedoch als cyclische Struktur vor, im Allgemeinen als 5- oder 6-Ring. Es kann sich um neutrale Verbindungen handeln, es können jedoch auch salzartige Verbindungen vorliegen. Insbesondere soll als cyclische Struktur ein 1,2,3-oxathiazin-4(3H)-on-2,2-dioxid, gegebenenfalls auch an den C-Atomen 5 und/oder 6 substituiert, oder ein Isothiazol-3(2H)-on-1,1-dioxid gegebenenfalls auch an den C-Atomen 4 und/oder 5 substituiert, vorliegen. Beispielsweise können ein oder mehrere gleiche oder unterschiedliche lineare, verzweigte, cyclische oder aromatische C1 bis C12-AlkylSubstituenten enthalten sein.

Als Verbindungen mit Sulfonimid- oder Amidosulfonat-Struktur sind beispielsweise solche der Formeln I, II, III, IV, V, VI geeignet.
I) R₁-NH-SO₃H und deren Salze mit R₁ = CₙH₂ₙ₊₁ (n= 1 bis 10), Cyclohexyl, Phenyl, Alkyl-substituiertes Cyclohexyl oder Phenyl;
II) R'₄-SO₂-NH-C(O)-R₄ mit R₄, R'₄ = CₙH₂ₙ₊₁ (n = 1 bis 10), Cyclohexyl, Phenyl, Alkyl-substituiertes Cyclohexyl oder Phenyl; oder mit solchen R₄ und R'₄, die eine gemeinsame, ggf. Alkyl-substituierte, C₂- oder C₃-Brücke als Bestandteil eines aliphatischen oder aromatischen 5- oder 6-Rings bilden; dabei können R₄, R'₄ gleich oder unterschiedlich sein;
III) R'₅-O-SO₂-NH-C(O)-R₅ mit R₅, R'₅ = CₙH₂ₙ₊₁ (n = 1 bis 10), Cyclohexyl, Phenyl, Alkyl-substituiertes Cyclohexyl oder Phenyl; oder mit solchen R₅ und R'₅, die eine gemeinsame, ggf. Alkyl-substituierte, C₂-Brücke als Bestandteil eines aliphatischen oder aromatischen 6-Rings bilden; dabei können R₅, R'₅ gleich oder unterschiedlich sein. 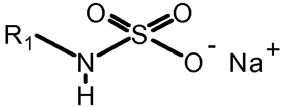
IV) mit R₁ wie unter I) definiert, als bevorzugte Ausführungsformen der Verbindungen der Formel I. 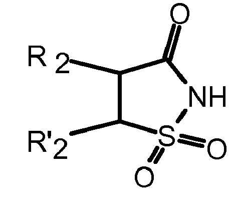
V mit R₂, R'₂ = CₙH₂ₙ₊₁ (n = 1 bis 10), Cyclohexyl, Phenyl, Alkyl-substituiertes Cyclohexyl oder Phenyl; oder mit solchen R₂ und R'₂, die eine gemeinsame, ggf. Alkyl-substituierte, C₃- oder C₄-Brücke als Bestandteil eines aliphatischen oder aromatischen 5- oder 6-Rings bilden; dabei können R₂, R'₂ gleich oder unterschiedlich sein. 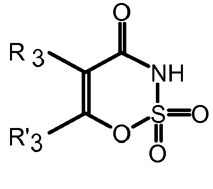
VI mit R₃, R'₃ = CₙH₂ₙ₊₁ (n = 1 bis 10), Cyclohexyl, Phenyl, Alkyl-substituiertes Cyclohexyl oder Phenyl; oder mit solchen R₃ und R'₃, die eine gemeinsame, ggf. Alkyl-substituierte, C₃- oder C₄-Brücke als Bestandteil eines aliphatischen oder aromatischen 5- oder 6-Rings bilden; dabei können R₃, R'₃ gleich oder unterschiedlich sein.

Insbesondere sind substituierte Amidosulfonate geeignet, wie Cyclohexylamidosulfonat, substituierte oder unsubstituierte Benzosulfimide (Benzoesäuresulfimide), wie 1,2-Benzisothiazol-3(2H)-on-1,1-dioxid, oder Alkyl-substituierte 3,4-Dihydro-1,2,3-oxathiazin-4-on-2,2-dioxide (1,2,3-Oxathiazin-4(3H)-on-2,2-dioxide), wie 6-Methyl-3,4-dihydro-1,2,3-oxathiazin-4-on-2,2-dioxid. Solche Verbindungen sind auch kommerziell erhältlich.

Der erfindungsgemäße Klebstoff soll die Verbindung (H) in einer Menge von 0,01 bis 10 Gew.-% aufweisen, insbesondere von 0,1 bis 5 Gew.-%, bezogen auf den gesamten Klebstoff. In einer besonderen Ausführungsform werden solche Verbindungen H eingesetzt, die toxikologisch unbedenklich sind. Werden Mischungen unterschiedlicher Verbindungen (H) eingesetzt, beziehen sich die angegebenen Grenzen auf die Gesamtmenge dieser Verbindungen (H).

In den erfindungsgemäßen Klebstoffen ist es zweckmäßig, dass gegebenenfalls weitere Bestandteile und Zusatzstoffe enthalten sind, wie beispielsweise Lösemittel, Weichmacher, Katalysatoren, Harze, Stabilisatoren, Pigmente oder Füllstoffe.

In einer Ausführungsform kann ein geeigneter Klebstoff mindestens ein klebrigmachendes Harz enthalten. Das Harz bewirkt eine zusätzliche Klebrigkeit. Es können grundsätzlich alle Harze eingesetzt werden, die verträglich sind, d.h. ein weitgehend homogenes Gemisch bilden. Weiterhin können auch Weichmacher enthalten sein, wie beispielsweise Weißöle, naphtenische Mineralöle, paraffinische Kohlenwasserstofföle, Polypropylen-, Polybuten-, Polyisopren-Oligomere, hydrierte Polyisopren- und/oder Polybutadien-Oligomere, Phthalate, Adipate, Benzoatester, pflanzliche oder tierische Öle und deren Derivate eingesetzt werden. Insbesondere sind solche Weichmacher geeignet, die lebensmittelrechtlich unbedenklich sind.
Als gegebenenfalls einsetzbare Stabilisatoren oder Antioxidantien sind sterisch gehinderte Phenole hohen Molekulargewichts, polyfunktionelle Phenole, schwefel- und phosphorhaltige Phenole oder Amine geeignet.

Es ist optional möglich, dem Klebstoff zusätzlich Silanverbindungen zuzusetzen. Es können die bekannten organofunktionellen Silane zugesetzt werden, wie (meth)acryloxyfunktionelle, epoxidfunktionelle, aminfunktionelle oder nicht reaktiv substituierte Silane eingesetzt werden. Insbesondere sollen Silane ausgewählt werden, die nur ein geringes gesundheitsgefährdendes Potential.aufweisen. Dabei kann die Menge bis zu 10 Gew.-% betragen.

Als gegebenenfalls zusätzlich vorhandenes Additiv kann ein reaktiver Klebstoff auch Katalysatoren enthalten. Als Katalysatoren können alle bekannten Verbindungen eingesetzt werden, die beispielsweise die Reaktion von OH-Gruppe und NCO-Gruppe katalysieren können, wie Metallverbindungen von Sn, Ti, Fe, Zn, Bi, Hg. Pb oder tertiäre Amine. Der Katalysator kann in einer Menge von 0 bis 5 Gew.-% insbesondere 0,05 bis etwa 1 Gew.-%, insbesondere auch 0 % eingesetzt werden, bezogen auf das Gesamtgewicht des Klebstoffs.

Eine besondere Ausführungsform setzt zu den Beschichtungsmitteln noch Pigmente ein. Es handelt sich dabei um feinteilige Pigmente, beispielsweise mit einer Teilchengröße < 5 µm. Eine Ausführungsform der Erfindung arbeitet mit plättchenförmigen Pigmenten, die in einer Komponente des Bindemittels dispergiert werden können. Eine andere Arbeitsweise setzt Nanopartikel ein. Diese haben üblicherweise eine Teilchengröße < 500 nm, insbesondere kleiner als 100 nm. Bei solchen Nanopigmenten kann es sich beispielsweise um solche handeln, die auf Basis von TiO₂, SiO₂, Fe₂O₃ oder ähnliche Oxide oder Oxihydrate. Dem Fachmann sind solche Pigmente bekannt.

Es ist möglich, dass die Klebstoffe auch Lösemittel enthalten. Es handelt sich dabei um die üblichen Lösemittel, die bei Temperaturen bis zu 120°C verdampfen können. Die Lösemittel können ausgewählt werden aus der Gruppe der aliphatischen Kohlenwasserstoffe, der aromatischen Kohlenwasserstoffe, Ketone oder Ester. In einer anderen Ausführungsform ist der Klebstoff lösemittelfrei, eine weitere Ausführungsform setzt Klebstoffdispersionen auf Basis von Wasser ein.

In den Klebstoffen können die bekannten Hilfsmittel und Additive und/oder die Verbindung (H) in einer oder in beiden Komponenten enthalten sein, so lange die Komponenten mit diesen Zusätzen lagerstabil sind. Es können Lösemittel enthalten sein, beispielsweise als lösemittelhaltige reaktive 1 K oder 2K-Klebstoffe, eine besondere Ausführungsform der Erfindung arbeitet jedoch lösemittelfrei, beispielsweise als TPU oder 1 K-PU-Schmelzklebstoffe oder als 1 K oder 2K reaktiver Klebstoff. Im Fall von 1 K-Klebstoffen können diese direkt aufgetragen werden. Werden 2K-Klebstoffe eingesetzt, sind diese unmittelbar vor der Applikation zu mischen.

Das Auftragen des Klebstoffs kann mit bekannten Vorrichtungen geschehen. Diese sind dem Fachmann bekannt, es kann sich dabei um Sprühauftrag, Rakelauftrag, Druckauftrag, Walzenauftrag oder aus Düsen und anderen Applikatoren handeln.

Werden reaktive Klebstoffe aufgetragen, vernetzen diese danach. Bei der Vernetzung wird ein sehr hohes Molekulargewicht oder ein Netzwerk aufgebaut, wobei auch Additive, die OH- oder NH-Gruppen aufweisen, gegebenenfalls in das Netzwerk chemisch eingebaut werden können und dann nicht weiter migrieren können.

In der besonderen Ausführungsform als Kaschierklebstoff zum Verkleben von Foliensubstraten ist es zweckmäßig, dass ein niedrigviskoser Klebstoff eingesetzt wird. Da die Klebstoffe insbesondere zum Beschichten von großen Flächen geeignet sind, sollen sie bei Auftragstemperatur von ca. 10 bis 75°C eine niedrige Viskosität aufweisen, bei Schmelzklebstoffen bis zu 110 °C. Die Viskosität der erfindungsgemäßen Klebstoffe, gemessen unmittelbar nach dem Mischen der Bestandteile oder als 1 K-Klebstoff, soll zwischen 200 bis 10000 mPas bei Auftragstemperatur betragen, bevorzugt 500 bis 3000 mPas (bei 10 bis 60°C, Brookfield-Viskosimeter, gemäß EN ISO 2555).

Ein weiterer Gegenstand der Erfindung ist ein Verfahren zum Verkleben von Substraten mit einem erfindungsgemäßen Klebstoff, wobei dieser 0,05 bis 10 Gew.-% einer Verbindung (H) enthält, die eine Sulfonimid oder Amidosulfonat-Gruppe enthält. Nach dem erfindungsgemäßen Verfahren wird ein geeigneter Klebstoff als Schicht auf ein Substrat aufgetragen. Das Substrat kann dabei gereinigt und/oder vorbehandelt werden. Der Klebstoff soll mit einer Schichtdicke von 1 g/m² bis 100 g/m² aufgetragen werden, bevorzugt von 2 bis 35 g/m² (Feststoff). Dabei soll eine niedrige Applikationsviskosität vorliegen, beispielsweise von 200 bis 10000 mPas. Um die Beschichtung zu erleichtern, ist es möglich, den Klebstoff auf eine erhöhte Temperatur zu erwärmen, insbesondere von 25 bis 60 °C, im Fall von TPU auch bis zu 110 °C. Der Klebstoff kann auf ein Substrat aufgetragen werden, es können aber auch beide Substrate mit dem Klebstoff beschichtet werden. In einer Ausführungsform des Verfahrens besitzt ein Substrat eine Metalloberfläche, entweder als Metallkörper oder als metallisierte Oberfläche. Dabei kann der erfindungsgemäße Klebstoff insbesondere auf die Metalloberfläche aufgetragen werden. Danach werden die Substrate zusammengeführt.

Eine bevorzugte Ausführungsform des Verfahrens verklebt zwei Foliensubstrate miteinander, es kann sich dabei um die oben beschriebenen Foliensubstrate handeln. Dabei kann bevorzugt ebenfalls ein Substrat mit Metalloberfläche eingesetzt werden, eine andere bevorzugte Form verklebt eine bedruckte Folienoberfläche. Nach dem Verkleben kann bei der Verwendung von reaktiven Klebstoffen die Aushärtung gegebenenfalls durch erhöhte Temperatur beschleunigt werden. Unmittelbar nach dem Verkleben mit der zweiten Folienschicht kann der Verarbeitungsprozess weitergeführt werden. Es hat sich gezeigt, dass durch den schnellen Haftungsaufbau die Mehrschichtfolie schnell bearbeitet und/oder konfektioniert werden kann. Die Haftung zwischen den beschriebenen Foliensubstraten ist sehr gut.

Ein weiterer Gegenstand der Erfindung ist ein Foliensubstrat, verklebt mit einem erfindungsgemäßen Klebstoff. Dabei soll eine Substratoberfläche eine metallische Oberfläche aufweisen oder eine bedruckte Kunststoffoberfläche. Diese Folien sind dann mit anderen Folienmaterialien zu Mehrschichtfolien verbunden worden. Die Klebstoffschichten sind weitgehend farblos, es können also auch farblose Folien verklebt werden, ohne den optischen Eindruck zu beeinträchtigen. Die Haftung der Mehrschichtsubstrate ist gut, auch auf schwierig zu verklebenden bedruckten Oberflächen ist ein guter Verbund gegeben.

Durch den erfindungsgemäßen Klebstoff und das Verfahren ist es möglich, die Verklebung von zwei Substraten zu verbessern. Dabei wird insbesondere die Verklebung von metallischen Substraten verbessert. Die Verklebung zeigt eine gute Stabilität und es kann auf eine aufwändige Vorbehandlung der Substrate verzichtet werden.

Im besonderen Fall der Verklebung von folienförmigen flexiblen Substraten wird ein schneller Haftungsaufbau gefunden. Die Klebstoffschicht verfärbt sich nicht in Kontakt mit dem Oberflächen. Es können auch durchsichtige Folienmaterialien oder metallisierte Oberflächen eingesetzt werden. Auch die Haftung zu bedruckten Folienoberflächen wird verbessert. Unmittelbar nach dem Verkleben entwickelt der Klebstoff schnell eine entsprechende Klebkraft. Damit ist sichergestellt, dass eine schnelle Weiterverarbeitung der Mehrschichtfolie möglich ist. Als Weiterverarbeitung kann eine Verklebung mit weiteren Folien vorgesehen sein, ein entsprechender Film kann bedruckt werden, oder es werden Konfektionierungsmaßnahmen durchgeführt.

Ein weiterer Vorteil ergibt sich aus der Möglichkeit, dass als Verbindung (H) zur Verbesserung der Haftung gesundheitlich unbedenkliche Substanzen ausgewählt werden können. Damit sind die erfindungsgemäß erhaltenen Mehrschichtsubstrate insbesondere für eine Anwendung in Verpackungen für die Lebensmittel- oder pharmazeutische Industrie geeignet. Ebenso hat es sich gezeigt, dass die verklebten Substrate eine verbesserte Haftung auch nach Sterilisation zeigen, beispielsweise bei einer UV-Bestrahlung, einer Sterilisation mit Wärme oder einer Dampfsterilisation.

### Versuchsreihe I

### Klebstoff:

Komponente B enthält ein handelsübliches Polyesterprepolymer, hergestellt aus Isophthalsäure, Adipinsäure, Diethylenglycol, 1,6-Hexandiol und Glycerin (die OH-Zahl beträgt 13 mg KOH/g bestimmt gemäß der Norm DIN 53240:1971-12). In der Komponente B liegt das Polyesterprepolymer gelöst in Ethylacetat vor, mit einem Feststoffanteil von 66 Gew.-% vor.

Viskosität: ca. 3500 mPas (Brookfield, LVT, gemäß EN ISO 2555) bei 20°C.

Einen 2-Komponenten Kaschierklebstoff erhält man durch Mischen der Komponente B mit einer Komponente A bestehend aus einem Isocyanathärter (Desmodur L75 und Desmodur N3300 im Gewichtsverhältnis von ca. 2:1, als 90%ige (Gew.-% bezogen auf Komponente A) Lösung in Ethylacetat, enthaltend 5 Gew.-% eines Silan-Haftvermittlers) im Verhältnis B:A = 7,4:1 (Gewicht).

Auf eine bedruckte Polyethylenterephthalatfolie wurde bei 45 °C maschinell (50 m/min) der Klebstoff mit einem Flächengewicht von 3,5 g/m² (fest) aufgetragen. Auf die so beschichtete Folie wurde eine Aluminiumfolie aufkaschiert. In einem zweiten Schritt wurde auf die Aluminiumseite dieses Verbundes in gleicher Weise eine CPP-Folie aufkaschiert.

Das Laminat wurde aufgerollt und bei Raumtemperatur gelagert.

### Beispiel 1 (Vergleich):

Ein 2-Komponenten Klebstoff der Reihe I wurde aufgetragen.

### Beispiel 2 (Erfindung):

Dem Klebstoff des Beispiels 1 wurde der Komponente B zusätzlich 1,2-Benzisothiazol-3(2H)-on-1,1-dioxid durch Rühren und Auflösen bei 75-80 °C in einer Menge von 1,2 Gew.-% bezogen auf die Komponente B zugesetzt. Es wurde wie in Beispiel 1 verarbeitet.

**Prüfergebnisse:**

| **Laminat und Lagerzeit** | **Beispiel 1 (Vergleich) Verbundhaftung [N/15mm]** | **Beispiel 2 (Erfindung) Verbundhaftung [N/15mm]** |
|---|---|---|
| Außenlage PET/Alu, 14 d | 2,9 (Verbundtrennung) | > 4,4 (PET-Riss) |
| Innenlage Alu/CPP, 4 d | 3,8 (Verbundtrennung) | 4,8 (Verbundtrennung) |
| Innenlage Alu/CPP, 7 d | 3,5 (Verbundtrennung) | 5,0 (Verbundtrennung) |
| Innenlage Alu/CPP, 14 d | 3,6 (Verbundtrennung) | 5,0 (Verbundtrennung) |

| **Laminat und Lagerzeit** | **Beispiel 1 (Vergleich) Verbundhaftung bei 90 °C [N/15mm]** | **Beispiel 2 Verbundhaftung bei 90 °C [N/15mm]** |
|---|---|---|
| Innenlage Alu/CPP, 14 d | 0,1 (Verbundtrennung) | 0,9 (Verbundtrennung) |
| Innenlage Alu/CPP, 14 d und anschl. Sterilisation 45 min bei 129 °C | 0,9 (Verbundtrennung) | 1,2 (Verbundtrennung) |

Die Verbundhaftungen wurden in Anlehnung an die Norm DIN EN 1895 ermittelt, wobei eine Zuggeschwindigkeit von 100 mm/min und eine Probenbreite von 15 mm gewählt wurden. Die Verbundhaftungen bei 90 °C heißem Wasser wurden in Anlehnung an die Norm DIN EN ISO 11339 ermittelt, wobei eine Zuggeschwindigkeit von 100 mm/min und eine Probenbreite von 15 mm gewählt wurden. Die Probenjustierung erfolgte über eine Rollvorrichtung, die in einer Kammer mit 90 °C heißem Wasser gelagert war.

Es lässt sich erkennen, dass Beispiel 2 in allen geprüften Dimensionen signifikant bessere Werte aufweist als die Referenz aus Beispiel 1. Die verklebten Schichten sind nicht verfärbt.

### Versuchsreihe II:

Einen 2-Komponenten Kaschierklebstoff erhält man durch Mischen der Komponente B mit einer Komponente A aus einem Isocyanathärter (Desmodur L75 und Desmodur N3300 im Gewichtsverhältnis von ca. 2:1, als 90%ige (Gew.-% bezogen auf Komponente A) Lösung in Ethylacetat), im Verhältnis B:A = 2,7:1 (Gewicht).

Auf eine bedruckte Polyethylenterephthalatfolie wurde bei 23 °C mit einem 15 µm Handrakel der Klebstoff mit einem Flächengewicht von ca. 8 g/m² aufgetragen. Die Folie wurde ca. 5 min. bei 90°C im Trockenschrank vom Lösemittel befreit. Auf die so beschichtete Folie wurde eine Aluminiumfolie aufkaschiert. In einem zweiten Schritt wurde auf die Aluminiumseite dieses Verbundes in gleicher Weise eine CPP-Folie aufkaschiert. Das Laminat wurde aufgerollt und bei Raumtemperatur gelagert.

### Beispiel 3 (Vergleich):

Ein 2-Komponenten Klebstoff der Reihe II wurde aufgetragen.

### Beispiel 4 (Erfindung):

Dem Klebstoff des Beispiels 3 wurde der Komponente B zusätzlich 1,2-Benzisothiazol-3(2H)-on-1,1-dioxid durch Rühren und Auflösen bei 75-80 °C in einer Menge von 2,5 Gew-% bezogen auf Komponente B zugesetzt. Es wurde wie in Beispiel 3 verarbeitet.

**Prüfergebnisse**

| Laminat und Lagerzeit | Beispiel 3 (Referenz) Verbundhaftung [N/15mm] | Beispiel 4 (Erfindung) Verbundhaftung [N/15mm] |
|---|---|---|
| Außenlage PET/Alu, 4 d | 4,1 (Verbundtrennung) | 2,2 (Verbundtrennung) |
| Außenlage PET/Alu, 7 d | 3,4 (Verbundtrennung) | 3,8 (Verbundtrennung) |
| Außenlage PET/Alu, 14 d | 2,4 (Verbundtrennung) | 2,2 (Verbundtrennung) |
| Außenlage PET/Alu, 4 d und anschl. Sterilisation 45 min bei 129 °C | 0,1 (Verbundtrennung) | > 3,4 (PET-Riss) |
| Außenlage PET/Alu, 7 d und anschl. Sterilisation 45 min bei 129 °C | 0,5 (Verbundtrennung) | 2,9 (Verbundtrennung) |
| Außenlage PET/Alu, 14 d und anschl. Sterilisation 45 min bei 129 °C | delaminiert | > 4,0 (PET-Riss) |
| Innenlage Alu/CPP, 4 d | 2,9 (Verbundtrennung) | > 3,0 (Al-Einriss) |
| Innenlage Alu /CPP, 7 d | 2,8 (Al-Einriss) | > 3,6 (Al-Einriss) |
| Innenlage Alu /CPP, 14 d | 3,5 (Verbundtrennung) | 2,8 (Verbundtrennung) |

Es lässt sich erkennen, dass Beispiel 4 in nahezu allen geprüften Dimensionen vergleichbare oder bessere Werte aufweist als die Referenz aus Beispiel 3. Vor allem die Haftung zur bedruckten PET-Folie wurde, insbesondere nach Sterilisation, deutlich gesteigert.

## Patentansprüche

1. Klebstoff zum Verkleben von Kunststoff- und/oder Metallsubstraten ausgewählt aus flüssigen oder thermoplastischen Klebstoffen, die in der Polymerkette Urethangruppen aufweisen, **dadurch gekennzeichnet, dass** der Klebstoff ausgewählt wird aus NCO-reaktiven Klebstoffen, Silan-reaktiven Klebstoffen oder thermoplastischen Polyurethanen (TPU) und als Bestandteil 0,01 bis 10 Gew-% mindestens einer Verbindung (H) mit einem Molekulargewicht unter 500 g/mol enthält, die mindestens eine Sulfonimid-Gruppe mit einer SO₂-NH-C(O)-Struktur oder mindestens eine Amidosulfonat-Gruppe aufweist.

2. Klebstoff nach Anspruch 1, **dadurch gekennzeichnet, dass** die Verbindungen (H) als Struktur cyclische Isothiazol-3(2H)-on-1,1-dioxin- oder 3,4-Dihydro-1,2,3-oxathiazin-4-on-2,2-dioxid-Gruppen aufweisen.

3. Klebstoff nach einem der Ansprüche 1 bis 2, **dadurch gekennzeichnet, dass** die Verbindungen (H) als Salz vorliegen.

4. Klebstoff nach einem der Ansprüche 1 bis 3, **dadurch gekennzeichnet, dass** der Klebstoff lösemittelhaltig, lösemittelfrei oder ein Dispersionsklebstoff ist.

5. Klebstoff nach Anspruch 4, **dadurch gekennzeichnet, dass** es sich um NCO-Gruppen-haltige 1 K- oder 2K-PU-Klebstoffe handelt.

6. Verfahren zum Verkleben von zwei Substraten, wobei die Substrate gegebenenfalls einer Vorbehandlung unterworfen werden, danach ein Klebstoff nach einem der Ansprüche 1 bis 5 auf mindestens ein Substrat aufgetragen wird und danach beide Substrate unter Druck zusammengefügt werden.

7. Verfahren nach Anspruch 6, **dadurch gekennzeichnet, dass** mindestens ein Substrat eine Metalloberfläche aufweist oder eine bedruckte Oberfläche.

8. Verfahren nach einem der Ansprüche 6 bis 7, **dadurch gekennzeichnet, dass** auf ein folienförmiges Substrat der Klebstoff aufgetragen wird und mit einem folienförmigen zweiten Substrat verklebt wird.

9. Verfahren nach einem der Ansprüche 6 bis 8, **dadurch gekennzeichnet, dass** der Klebstoff in einer Menge von 1 bis 100 g/m² aufgetragen wird.

10. Verwendung von Isothiazol-3-on-1,1-dioxid- oder 3,4-Dihydro-1,2,3-oxathiazin-4-on-2,2-dioxid-Derivaten als Haftvermittler in Klebstoffen.

11. Verwendung nach Anspruch 10 als Haftvermittler beim Verkleben von Mehrschichtfolien für die Lebensmittel- oder Pharmazeutische Industrie.

## Claims

1. An adhesive for bonding plastics substrates and/or metal substrates, selected from liquid or thermoplastic adhesives that comprise urethane groups in the polymer chain, **characterized in that** the adhesive is selected from NCO-reactive adhesives, silane-reactive adhesives, or thermoplastic polyurethanes (TPUs) and contains, as a component, 0.01 to 10 wt.% of at least one compound (H) having a molecular weight below 500 g/mol that comprises at least one sulfonimide group having a SO₂-NH-C(O) structure, or at least one amidosulfonate group.

2. The adhesive according to claim 1, **characterized in that** the compounds (H) comprise, as a structure, cyclic isothiazol-3(2H)-one-1,1-dioxide groups or 3,4-dihydro-1,2,3-oxathiazine-4-one-2,2-dioxide groups.

3. The adhesive according to one of claims 1 to 2, **characterized in that** the compounds (H) are present as salts.

4. The adhesive according to one of claims 1 to 3, **characterized in that** the adhesive is solvent-containing, solvent-free, or is a dispersion adhesive.

5. The adhesive according to claim 4, **characterized in that** the adhesives are NCO-group-containing one-component or two-component polyurethane adhesives.

6. A method for bonding two substrates, wherein the substrates are optionally pretreated, an adhesive according to one of claims 1 to 5 is then applied to at least one substrate, and the two substrates are then joined together under pressure.

7. The method according to claim 6, **characterized in that** at least one substrate comprises a metal surface or a printed surface.

8. The method according to one of claims 6 to 7, **characterized in that** the adhesive is applied to a film-like substrate and is bonded to a film-like second substrate.

9. The method according to one of claims 6 to 8, **characterized in that** the adhesive is applied in a quantity of from 1 to 100 g/m².

10. A use of isothiazole-3-one-1,1-dioxide derivatives or 3,4-dihydro-1,2,3-oxathiazine-4-one-2,2-dioxide derivatives as an adhesion promoter in adhesives.

11. The use according to claim 10 as an adhesion promoter for bonding multi-layer films for the food or pharmaceuticals industry.

## Revendications

1. Adhésif destiné au collage de substrats de matières plastiques et/ou métalliques choisi parmi les adhésifs liquides ou thermoplastiques, qui comportent des groupes uréthane dans la chaîne polymère, **caractérisée en ce que** l'adhésif est choisi parmi les adhésifs présentant une réactivité de groupes NCO, des adhésifs présentant une réactivité de groupes silane ou de polyuréthanes thermoplastiques (TPU) et qui contient comme constituant de 0,01 à 10% d'au moins un composé (H) ayant un poids moléculaire inférieur à 500 g/mol, qui comporte au moins un groupe sulfonimide ayant une structure SO₂-NH-C(O) ou au moins un groupe amidosulfonate.

2. Adhésif selon la revendication 1, **caractérisé en ce que** les composés (H) comportent comme structure des groupes cycliques isothiazole-3(2H)-on-1,1-dioxyde ou 3,4-dihydro-1,2,3-oxathiazin-4-on-2,2dioxyde.

3. Adhésif selon l'une des revendications 1 à 2, **caractérisé en ce que** les composés (H) sont présents sous forme de sel.

4. Adhésif selon l'une des revendications 1 à 3, **caractérisé en ce que** l'adhésif est à base de solvant ou est dépourvu de solvant ou est un adhésif de dispersion.

5. Adhésif selon la revendication 4, **caractérisé en ce qu'**il s'agit d'adhésifs 1K- ou 2K-PU contenant des groupes NCO.

6. Procédé de collage de deux substrats, dans lequel les substrats sont éventuellement soumis à un prétraitement,puis un adhésif selon l'une des revendications 1 à 5 est appliqué sur au moins un substrataprès quoi les deux substrats sont assemblés sous pression.

7. Procédé selon la revendication 6, **caractérisé en ce qu'**au moins un substrat possède une surface métallique ou une surface imprimée.

8. Procédé selon l'une des revendications 6 à 7, **caractérisé en ce que** l'adhésif est appliqué sur un substrat en forme de film et est collé à un second substrat en forme de film.

9. Procédé selon l'une des revendications 6 à 8, **caractérisé en ce que** l'adhésif est appliqué dans une quantité de 1 à 100 g/m².

10. Utilisation de dérivés d'isothiazole-3-on-1,1-dioxyde ou de 3,4-dihydro-1,2,3-oxathiazin-4-on-2,2-dioxyde comme promoteur d'adhérence dans des adhésifs.

11. Utilisation selon la revendication 10 comme promoteur d'adhérence dans le collage de films multicouches pour l'industrie alimentaire ou pharmaceutique.
